(19) Europäisches Patentamt
European Patent Office
Office européen des brevets

(11) **EP 2 275 925 B1**

(12) **FASCICULE DE BREVET EUROPEEN**

(45) Date de publication et mention
de la délivrance du brevet:
**18.09.2013  Bulletin 2013/38**

(51) Int Cl.:
***G06F 7/72*** *(2006.01)*

(21) Numéro de dépôt: **10168455.3**

(22) Date de dépôt: **05.07.2010**

(54) **Procédé de traitement cryptographique de données et dispositif associé**

Verfahren und Vorrichtung zur kryptografischen Datenverarbeitung

Method and apparatus for cryptographic data processing

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **06.07.2009  FR 0954666**

(43) Date de publication de la demande:
**19.01.2011  Bulletin 2011/03**

(73) Titulaire: **Oberthur Technologies**
**92700 Colombes (FR)**

(72) Inventeurs:
• **Giraud, Christophe**
**33600, Pessac (FR)**
• **Verneuil, Vincent**
**13100, Aix en Provence (FR)**

(74) Mandataire: **Bonnans, Arnaud et al**
**Santarelli,**
**14 avenue de la Grande Armée,**
**BP 237**
**75822 Paris Cedex 17 (FR)**

(56) Documents cités:
**WO-A1-2007/045258**

• **MARC JOYE ED - JOACHIM VON ZUR GATHEN
ET AL: "Fast Point Multiplication on Elliptic
Curves without Precomputation" 6 juillet 2008
(2008-07-06), ARITHMETIC OF FINITE FIELDS;
[LECTURE NOTES IN COMPUTER SCIENCE],
SPRINGER BERLIN HEIDELBERG, BERLIN,
HEIDELBERG, PAGE(S) 36 - 46 , XP019090840
ISBN: 9783540694984 * 2.2 Point Addition * * 4.1
Coordinate Systems * * 4.3 Right-to-left Methods:
Algorithm 3 * * 4.3 Right-to-left Methods: last
paragraph ***
• **CHEVALLIER-MAMES B ET AL: "Low-Cost
Solutions for Preventing Simple Side-Channel
Analysis: Side-Channel Atomicity" IEEE
TRANSACTIONS ON COMPUTERS, IEEE
SERVICE CENTER, LOS ALAMITOS, CA, US, vol.
53, no. 6, 1 juin 2004 (2004-06-01), pages 760-768,
XP011111508 ISSN: 0018-9340**
• **COHEN H ET AL: "EFFICIENT ELLIPTIC CURVE
EXPONENTIATION USING MIXED
COORDINATES" ASIACRYPT. INTERNATIONAL
CONFERENCE ON THE THEORY AND
APPLICATIONOF CRYPTOLOGY AND
INFORMATION SECURITY, X, XX, 18 octobre 1998
(1998-10-18), pages 51-65, XP000856525**

EP 2 275 925 B1

**Description**

L'invention concerne un procédé de traitement, de préférence cryptographique, de données, par exemple mis en oeuvre au sein d'une entité électronique, et un dispositif associé (par exemple cette entité électronique).

Dans le domaine du traitement des données (ces données pouvant représenter par exemple un message à échanger ou une clé cryptographique de chiffrement d'un message de ce type), on utilise les propriétés des courbes elliptiques sur les corps finis lors des calculs cryptographiques impliqués par le traitement des données, par exemple pour signature d'un message ou échange de clés entre partenaires.

Pour mettre en pratique ces traitements, de manière générale dans une entité électronique, on utilise une représentation particulière des points de la courbe elliptique au moyen par exemple d'une pluralité d'éléments d'un corps de Galois (formant les coordonnées du point), telle que par exemple la représentation projective jacobienne (représentation par un triplet de points du corps de Galois $F_p$) ou une représentation projective jacobienne modifiée (au moyen de quatre éléments ou coordonnées du corps de Galois $F_p$), comme décrit par exemple dans l'article "Efficient elliptic curve exponentiation using mixed coordinate" de H. Cohen, T. Ono, and A. Miyaji, in K. Ohta and P. Dinggyi, editors, Advances in Cryptology - ASIACRYPT '98, volume 1514 of Lecture Notes in Computer Science, pages 51-65. Springer, 1998.

Les opérations sur la courbe elliptique se ramènent alors en effet à des opérations dans le corps de Galois $F_p$.

Ainsi par exemple une addition ou un doublement sur la courbe elliptique (opérations qui permettent par composition de réaliser la multiplication par un scalaire sur la courbe elliptique comme décrit par exemple dans l'article précité) sont réalisés par la mise en oeuvre d'opérations dans le corps de Galois $F_p$ sur les coordonnées du ou des points concernés (ces opérations dans le corps de Galois devant typiquement résulter en des additions, des soustractions, des multiplications et des élévations à une puissance 2, 3 ou 4).

Afin de se protéger des attaques par canal auxiliaire (en anglais "*Side Channel Attacks*") telles que l'observation de la consommation énergétique de l'entité électronique afin de tenter de déterminer les opérations qui y sont mises en oeuvre, il a été proposé de réaliser les opérations susmentionnées dans le corps de Galois parmi un ensemble plus large d'opérations, dont certaines sont par conséquent factices, de telle sorte que la suite des types d'opérations successives forme une répétition périodique d'un nombre de types prédéterminé, et ce, quelle que soit l'opération sur la courbe elliptique concernée. Cette technique est décrite de manière générale dans la demande de brevet FR 2 838 210 et dans son application aux courbes elliptiques dans l'article "Low-cost Solutions for Preventing Simple Side-Channel Analysis : Side-Channel Atomicity" de B. Chevallier-Mames, M. Ciet, and M. Joye, IEEE Transactions on Computers, 53(6) : 760-768, 2004 (voir également "*Aspects of Fast and Secure Arithmetics for Elliptic Curve Cryptography*" de M. Ciet, thèse de doctorat, Université catholique de Louvain, juin 2003).

Dans cet article, on propose ainsi de mettre en oeuvre la répétition d'un bloc élémentaire (dit bloc atomique) formé par la succession d'une multiplication, d'une addition, d'une opposition et d'une nouvelle addition (toutes ces opérations étant considérées dans le corps de Galois $F_p$). Comme déjà indiqué, quelle que soit l'opération (doublement ou addition) réalisée sur la courbe elliptique, cette opération est mise en oeuvre pratiquement dans l'entité électronique par la répétition de blocs élémentaires du même type (10 blocs dans le cas du doublement et 16 blocs dans le cas de l'addition), les données manipulées variant par contre d'un bloc élémentaire à l'autre.

La mise en oeuvre systématique de multiplications par l'entité électronique (à l'aide par exemple d'une instruction de multiplication au sein d'un microprocesseur de l'entité électronique), dans les cas où les deux opérandes sont distincts comme dans celui où les deux opérandes sont identiques, permet dans ce contexte d'utiliser fréquemment des opérations du même type (ici des multiplications) et participent donc à la possibilité de définir le bloc élémentaire à répéter.

Dans ce contexte, l'invention propose un procédé de traitement cryptographique de données mis en oeuvre au sein d'une entité électronique, dans lequel on détermine, à partir d'un premier point sur une courbe elliptique représenté au moyen d'au moins trois premiers éléments d'un corps de Galois, un second point sur la courbe elliptique représenté au moyen d'au moins trois seconds éléments du corps de Galois, chacun des seconds éléments étant obtenu à partir des premiers éléments au moyen d'un premier ensemble d'opérations comprenant des multiplications et des additions, dans lequel on met en oeuvre un second ensemble d'opérations successives ayant chacune un type, la suite des types des opérations successives du second ensemble formant une répétition périodique d'une pluralité de types d'opération incluant au moins une multiplication et une addition dans le corps de Galois, le second ensemble d'opérations comprenant le premier ensemble d'opérations, caractérisé en ce que la pluralité de types d'opération comprend une mise au carré dans le corps de Galois.

L'utilisation d'une opération de mise au carré, dont la mise en oeuvre est plus rapide qu'une multiplication (notamment pour un microprocesseur d'une entité électronique), permet de réduire le temps de mise en oeuvre des opérations sur la courbe elliptique, sans toutefois compromettre la possibilité d'effectuer ces opérations par la répétition de blocs élémentaires à types d'opération prédéfinis, contrairement à ce qui pouvait paraître souhaitable comme indiqué ci-dessus.

Lesdits trois premiers éléments sont par exemple des coordonnées projectives jacobiennes du premier point et lesdits trois seconds éléments par exemple des coordonnées projectives jacobiennes du second point.

Selon un mode de réalisation envisagé plus loin dans la description, le second point est le produit scalaire du premier point par un entier ; ce produit scalaire peut faire partie d'un algorithme cryptographique de signature (par exemple selon le protocole ECDSA) ou d'échange de clés cryptographiques (par exemple selon le protocole ECDH).

Un tel produit scalaire est par exemple mise en oeuvre au moyen d'additions en coordonnées projectives jacobiennes et de doublements en coordonnées projectives jacobiennes modifiées, ce qui limite le nombre de multiplications à effectuer.

En variante, le second point peut être la somme du premier point et d'un troisième point de la courbe elliptique.

La courbe elliptique peut en pratique avoir pour équation projective jacobienne de Weierstrass $Y^2 = X^3 + aXZ^4 + bZ^6$, où a et b sont des éléments du corps de Galois et $4a^3 + 27b^2$ n'est pas l'élément nul.

Selon un mode de réalisation envisageable, l'entité électronique peut être un microprocesseur, auquel cas chacune desdites opérations correspond à une instruction du microprocesseur. En variante, l'entité électronique peut être une carte à microcircuit intégrant un processeur apte à exécuter des instructions correspondant auxdites opérations.

L'invention propose également une entité électronique de traitement cryptographique de données comprenant des moyens de traitement aptes à déterminer, à partir d'un premier point sur une courbe elliptique représenté au moyen d'au moins trois premiers éléments d'un corps de Galois, un second point sur la courbe elliptique représenté au moyen d'au moins trois seconds éléments du corps de Galois, chacun des seconds éléments étant obtenu à partir des premiers éléments au moyen d'un premier ensemble d'opérations comprenant des multiplications et des additions, les moyens de traitement étant apte à mettre en oeuvre un second ensemble d'opérations successives ayant chacune un type, la suite des types des opérations successives du second ensemble formant une répétition périodique d'une pluralité de types d'opération incluant au moins une multiplication et une addition dans le corps de Galois, le second ensemble d'opérations comprenant le premier ensemble d'opérations, caractérisé en ce que la pluralité de types d'opération comprend une mise au carré dans le corps de Galois.

D'autres caractéristiques et avantages de l'invention apparaîtront à lumière de la description qui suit.

Le procédé de traitement de données (par exemple de message ou de clé cryptographique) décrit ci-après est mis en oeuvre au sein d'une entité électronique, par exemple une entité électronique, telle qu'une carte à microcircuit, comprenant un microprocesseur auquel cas le procédé est mis en oeuvre par l'exécution d'instructions au sein du microprocesseur et les opérations effectuées sur les données traitées sont réalisées par de telles instructions. En variante, l'entité électronique pourrait être réalisée en logique câblée, tel que c'est le cas pour un coprocesseur cryptographique.

Dans le présent mode de réalisation, on considère une courbe elliptique $\varepsilon$ d'équation affine :

$$y^2 = x^3 + ax + b$$

et donc d'équation projective jacobienne de Weierstraβ l'équation :

$$Y^2 = X^3 + aXZ^4 + bZ^6,$$

où $a, b \in F_p$ et $4a^3 + 27b^2 \neq 0$.

On rappelle qu'un point P de coordonnées affines $(x, y)$ a pour coordonnées projectives jacobiennes homogènes $(X : Y : Z) = (x : y : 1)$.

Réciproquement, un point de coordonnées projectives jacobiennes $(X : Y : Z)$ a pour coordonnées affines : $(x, y) = (X/Z, Y/(Z^2))$ .

Sauf mention expresse, on utilise dans la suite les coordonnées projectives jacobiennes.

L'opposé d'un point $(X : Y : Z)$ est $(X : -Y : Z)$ et le point à l'infini est représenté par $(1 : 1 : 0)$.

La somme de $P = (X_1 : Y_1 : Z_1)$ et $Q = (X_2 : Y_2 : Z_2)$, où $P, Q \neq O$ et $P \neq \pm Q$, est le point $P+Q = (X_3 : Y_3 : Z_3)$ tel que :

$$A = X_1 Z_2^{\,2}$$

$$\begin{cases} X_3 = F^2 - E^3 - 2AE^2 \\ Y_3 = F(AE^2 - X_3) - CE^3 \\ Z_3 = Z_1 Z_2 E \end{cases} \quad \text{avec} \quad \begin{aligned} B &= X_2 Z_1^{\,2} \\ C &= Y_1 Z_2^{\,3} \\ D &= Y_2 Z_1^{\,3} \\ E &= B - A \\ F &= D - C \end{aligned}$$

Le double d'un point P = $(X_1 : Y_1 : Z_1)$ est le point 2P = $(X_3 : Y_3 : Z_3)$ tel que :

$$\begin{cases} X_3 = B^2 - 2A \\ Y_3 = B(A - X_3) - 8Y_1^{\,4} \\ Z_3 = 2Y_1 Z_1 \end{cases} \quad \text{avec} \quad \begin{aligned} A &= 4X_1 Y_1^{\,2} \\ B &= 3X_1^{\,2} + aZ_1^{\,4} \end{aligned}$$

Afin de réduire le nombre d'opérations (de multiplication) nécessaires à la détermination du double d'un point, on utilise la représentation projective jacobienne modifiée, comme expliqué par exemple dans l'article "*Efficient elliptic curve exponentiation using mixed coordinate*" déjà mentionné. Un point P de coordonnées projectives jacobiennes *(X : Y : Z)* a pour coordonnées projectives jacobiennes modifiées *(X : Y : Z: aZ$^4$)*.

Dans cette représentation, le double d'un point $P = (X_1 : Y_1 : Z_1 : W_1)$ est le point $2P = (X_3 : Y_3 : Z_3 : W_3)$ tel que :

$$\begin{cases} X_3 = A^2 - 2C \\ Y_3 = A(C - X_3) - 8B \\ Z_3 = 2Y_1 Z_1 \\ W_3 = 16BW_1 \end{cases} \quad \text{avec} \quad \begin{aligned} A &= 3X_1^{\,2} + W_1 \\ B &= Y_1^{\,4} \\ C &= 2((X_1 + Y_1^{\,2})^2 - X_1^{\,2} - B) \end{aligned}$$

On propose ici de mettre en oeuvre l'addition en coordonnées projectives jacobiennes $(X_3 : Y_3 : Z_3) \leftarrow (X_1 : Y_1 : Z_1) + (X_2 : Y_2 : Z_2)$ définie ci-dessus au moyen des opérations suivantes :

$$A.\begin{cases} T_1 \leftarrow Z_2^2 \\ \varnothing \\ \varnothing \\ T_2 \leftarrow Y_1.Z_2 \\ \varnothing \\ Y_1 \leftarrow Y_2.Z_1 \\ \varnothing \\ T_3 \leftarrow T_1.T_2 \\ \varnothing \\ \varnothing \\ T_4 \leftarrow Z_1^2 \\ \varnothing \\ T_2 \leftarrow Y_1.T_4 \\ \varnothing \\ T_3 \leftarrow -T_3 \\ T_2 \leftarrow T_2 + T_3 \\ Y_1 \leftarrow T_1.X_1 \\ \varnothing \\ \varnothing \\ \varnothing \\ X_1 \leftarrow X_2.T_4 \\ Y_1 \leftarrow -Y_1 \\ X_1 \leftarrow X_1 + Y_1 \end{cases} \qquad B.\begin{cases} T_1 \leftarrow X_1^2 \\ \varnothing \\ Y_1 \leftarrow -Y_1 \\ T_4 \leftarrow Y_1.T_1 \\ \varnothing \\ Y_1 \leftarrow T_1.X_1 \\ \varnothing \\ T_1 \leftarrow Z_1.X_1 \\ \varnothing \\ \varnothing \\ X_1 \leftarrow T_2^2 \\ X_1 \leftarrow -X_1 \\ Z_1 \leftarrow T_1.Z_2 \\ T_1 \leftarrow T_4 + T_4 \\ \varnothing \\ X_1 \leftarrow X_1 + T_1 \\ T_1 \leftarrow Y_1.T_3 \\ X_1 \leftarrow Y_1 + X_1 \\ T_1 \leftarrow -T_1 \\ T_4 \leftarrow T_4 + X_1 \\ T_3 \leftarrow T_4.T_2 \\ X_1 \leftarrow -X_1 \\ Y_1 \leftarrow T_3 + T_1 \end{cases}$$

$$X_3 \leftarrow X_1, Y_3 \leftarrow Y_1, Z_3 \leftarrow Z_1.$$

Le doublement en coordonnées jacobiennes modifiées $(X : Y : Z : W) \leftarrow 2 * (X : Y : Z : W)$ défini ci-dessus est quant à lui mis en oeuvre au moyen des opérations suivantes :

$$C. \begin{cases} T_1 \leftarrow X^2 \\ T_2 \leftarrow Y + Y \\ \varnothing \\ Z \leftarrow T_2.Z \\ T_4 \leftarrow T_1 + T_1 \\ T_3 \leftarrow T_2.Y \\ Y \leftarrow T_3 + T_3 \\ T_2 \leftarrow Y.T_3 \\ T_1 \leftarrow T_4 + T_1 \\ T_1 \leftarrow T_1 + W \\ T_3 \leftarrow T_1^2 \\ \varnothing \\ T_4 \leftarrow Y.X \\ X \leftarrow W + W \\ T_4 \leftarrow -T_4 \\ T_3 \leftarrow T_3 + T_4 \\ W \leftarrow T_2.X \\ X \leftarrow T_3 + T_4 \\ T_2 \leftarrow -T_2 \\ Y \leftarrow T_4 + X \\ T_4 \leftarrow Y.T_1 \\ T_4 \leftarrow -T_4 \\ Y \leftarrow T_4 + T_2 \end{cases}$$

Les symboles Ø représentent des opérations factices qui ne manipulent pas les données mentionnées ci-dessus, mais travaillent avec d'autres registres (ou mémoires) dédiées à la mise en oeuvre de ces opérations factices Ø.

Les opérations factices 0 peuvent ainsi être choisies de telle sorte que la suite des types d'opérations (ou patron d'atomicité) est identique pour les séries d'opérations A, B et C. Par exemple, la seconde opération de la série C étant une addition, les secondes opérations (factices) des séries A et B sont des additions.

On rappelle que le symbole ← représente le remplacement de la donnée (en général du registre) précédant le symbole ← par le résultat de l'opération indiquée après le symbole ←.

Les opérations d'addition et de doublement décrites ci-dessus sont par exemple mises en oeuvre au sein de l'entité électronique pour la réalisation d'un produit scalaire sur la courbe elliptique, c'est-à-dire le produit d'un entier d par un point P de la courbe elliptique ε.

Le produit scalaire par un entier peut en effet toujours être ramené à des doublements et des additions du fait de la décomposition de l'entier en base 2, comme dans le cadre de l'algorithme couramment utilisé dénommé *"double and add"* ou dans le cadre d'algorithmes plus évolués, comme par exemple dans l'article *"Efficient elliptic curve exponentiation using mixed coordinate"* précité ou dans l'article *"Fast point multiplication on elliptic curves without precomputation"* de M. Joye in 2nd International Workshop on the Arithmetic of Finite Fields (WAIFI 2008), 07 2008.

Le produit scalaire est par exemple utilisé lorsque l'entité électronique doit effectuer une signature en utilisant le protocole ECDSA (*"Elliptic Curve Digital Signature Algorithm",* utilisé dans différentes normes) qui nécessite le calcul du produit scalaire k.P, k étant un nombre aléatoire, ou bien lorsque l'entité électronique permet d'effectuer un échange de clé entre deux partenaires via le protocole ECDH (pour *"Elliptic Curve Diffie-Hellman"*) qui nécessite le calcul du produit scalaire $d_A.P$ ($d_A$ étant un entier choisi par le premier partenaire, le produit scalaire devant alors être envoyé au second partenaire), ou le calcul du produit scalaire $d_A.(d_B.P)$ (le point $d_B.P$ étant le point reçu du second partenaire par le premier partenaire), la clé secrète partagée étant alors déterminée à partir de la coordonnée affine x du point $d_A.(d_B.P)$.

La détermination du produit scalaire est ainsi réalisée par la mise en oeuvre successive d'opérations de type A et B d'une part et C d'autre part, succession qui dépend de l'opérande entier (respectivement d, k et $d_A$ dans les exemples ci-dessus). Toutefois, du fait que la suite des types des opérations de chacune des séries d'opérations A, B, C est identique et que les types d'opération mises en oeuvre pour réaliser un produit scalaire (composé d'opérations de types A, B et C) forme donc une répétition périodique d'une pluralité de types d'opération, il ne sera pas possible à un attaquant extérieur observant l'entité électronique de déterminer dans quel ordre les séries d'opérations A, B, C sont réalisées et l'attaquant n'aura pas accès à l'opérande entier.

Par ailleurs, chacune des séries A, B, C utilise deux opérations de mise au carré, préalablement mises en oeuvre par des multiplications, et on obtient ainsi un gain en temps de calcul de l'ordre de quelques pourcents.

On remarque que, par rapport à la solution décrite dans l'article "*Low cost solutions for preventing simple side channel analysis: side-channel atomicity*" précité, les séries d'opérations A, B, C ci-dessus sont obtenues en regroupant huit blocs atomiques tels que proposés dans l'article (chaque groupe de huit blocs formant un "*patron d'atomicité*"), en modifiant deux de ces blocs atomiques par le remplacement d'une multiplication par une mise au carré (d'où un premier gain en temps de calcul), puis par la suppression de certaines opérations du patron d'atomicité qui ne sont utilisées dans aucun cas (d'où un second gain en temps de calcul). Le regroupement de blocs atomiques est notamment rendu possible du fait que le nombre de blocs atomiques nécessaires à l'addition en coordonnées projectives jacobiennes et le nombre de blocs atomiques nécessaires au doublement en coordonnées projectives jacobiennes modifiées ont un plus petit multiple commun strictement supérieur à1.

En variante, on aurait pu former un patron d'atomicité à partir de quatre blocs atomiques tels que décrit dans l'article et modifier seulement le premier bloc atomique de chaque patron d'atomicité (remplacement dans ce bloc de la multiplication par une mise au carré).

Le patron d'atomicité obtenu selon cette variante est à répéter deux fois pour un doublement et quatre fois pour une addition, avec les mêmes avantages en temps de calcul que décrit précédemment.

Les exemples qui précèdent ne sont que des modes possibles de mise en oeuvre de l'invention qui ne s'y limite pas.


**Revendications**

1. Procédé de traitement cryptographique de données mis en oeuvre au sein d'une entité électronique,
   dans lequel on détermine, à partir d'un premier point sur une courbe elliptique représenté au moyen d'au moins trois premiers éléments d'un corps de Galois, un second point sur la courbe elliptique représenté au moyen d'au moins trois seconds éléments du corps de Galois, chacun des seconds éléments étant obtenu à partir des premiers éléments au moyen d'un premier ensemble d'opérations comprenant des multiplications et des additions,
   dans lequel on met en oeuvre un second ensemble d'opérations successives ayant chacune un type, la suite des types des opérations successives du second ensemble formant une répétition périodique d'une pluralité de types d'opération incluant au moins une multiplication et une addition dans le corps de Galois, le second ensemble d'opérations comprenant le premier ensemble d'opérations,
   **caractérisé en ce que** la pluralité de types d'opération comprend une mise au carré dans le corps de Galois.

2. Procédé selon la revendication 1, dans lequel lesdits trois premiers éléments sont des coordonnées projectives jacobiennes du premier point.

3. Procédé selon la revendication 1 ou 2, dans lequel lesdits trois seconds éléments sont des coordonnées projectives jacobiennes du second point.

4. Procédé selon l'une des revendications 1 à 3, dans lequel le second point est le produit scalaire du premier point par un entier.

5. Procédé selon la revendication 4, dans lequel le produit scalaire est mise en oeuvre au moyen d'additions en coordonnées projectives jacobiennes et de doublements en coordonnées projectives jacobiennes modifiées.

6. Procédé selon l'une des revendications 1 à 3, dans lequel le second point est la somme du premier point et d'un troisième point de la courbe elliptique.

7. Procédé selon l'une des revendications 1 à 6, dans lequel la courbe elliptique a pour équation projective jacobienne

de Weierstrass $y^2 = X^3 + aXZ^4 + bZ^6$, où a et b sont des éléments du corps de Galois et $4a^3 + 27b^2$ n'est pas l'élément nul.

8.  Procédé selon l'une des revendications 1 à 7, dans lequel l'entité électronique est un microprocesseur et dans lequel chacune desdites opérations correspond à une instruction du microprocesseur.

9.  Entité électronique de traitement cryptographique de données comprenant des moyens de traitement aptes à déterminer, à partir d'un premier point sur une courbe elliptique représenté au moyen d'au moins trois premiers éléments d'un corps de Galois, un second point sur la courbe elliptique représenté au moyen d'au moins trois seconds éléments du corps de Galois, chacun des seconds éléments étant obtenu à partir des premiers éléments au moyen d'un premier ensemble d'opérations comprenant des multiplications et des additions,
les moyens de traitement étant apte à mettre en oeuvre un second ensemble d'opérations successives ayant chacune un type, la suite des types des opérations successives du second ensemble formant une répétition périodique d'une pluralité de types d'opération incluant au moins une multiplications et une addition dans le corps de Galois, le second ensemble d'opérations comprenant le premier ensemble d'opérations,
**caractérisé en ce que** la pluralité de types d'opération comprend une mise au carré dans le corps de Galois.

**Patentansprüche**

1.  Verfahren zur kryptografischen Datenverarbeitung, das in einer elektronischen Einheit eingesetzt wird,
wobei ausgehend von einem ersten Punkt auf einer elliptischen Kurve, der mittels von mindestens drei ersten Elementen eines Galois-Körpers dargestellt ist, ein zweiter Punkt auf der elliptischen Kurve bestimmt wird, der mittels von mindestens drei zweiten Elementen des Galois-Körpers dargestellt ist, wobei jedes der zweiten Elemente ausgehend von den ersten Elementen mittels einer ersten Menge von Operationen erhalten wird, die Multiplikationen und Additionen umfasst,
wobei eine zweite Menge von aufeinanderfolgenden Operationen durchgeführt wird, die jeweils einen Typ aufweisen, wobei die Folge der Typen der aufeinanderfolgenden Operationen der zweiten Menge eine regelmäßig wiederkehrende Wiederholung von mehreren Operationstypen bildet, die mindestens eine Multiplikation und eine Addition im Galois-Körper umfassen, wobei die zweite Menge von Operationen die erste Menge von Operationen umfasst,
**dadurch gekennzeichnet, dass** die mehreren Operationstypen ein Quadrieren im Galois-Körper umfassen.

2.  Verfahren nach Anspruch 1, wobei die drei ersten Elemente projektive Jacobi-Koordinaten des ersten Punkts sind.

3.  Verfahren nach Anspruch 1 oder 2, wobei die drei zweiten Elemente projektive Jacobi-Koordinaten des zweiten Punkts sind.

4.  Verfahren nach einem der Ansprüche 1 bis 3, wobei der zweite Punkt das Skalarprodukt des ersten Punkts mit einer ganzen Zahl ist.

5.  Verfahren nach Anspruch 4 wobei das Skalarprodukt mittels Additionen in projektiven Jacobi-Koordinaten und Verdopplungen in geänderten projektiven Jacobi-Koordinaten ausgeführt wird.

6.  Verfahren nach einem der Ansprüche 1 bis 3, wobei der zweite Punkt die Summe des ersten Punkts und eines dritten Punkts der elliptischen Kurve ist.

7.  Verfahren nach einem der Ansprüche 1 bis 6, wobei die elliptische Kurve als Weierstraßsche projektive Jacobi-Gleichung $Y^2 = X^3 + aXZ^4 + bZ^6$ aufweist, wo a und b Elemente des Galois-Körpers sind und $4a^3 + 27b^2$ nicht das Nullelement ist.

8.  Verfahren nach einem der Ansprüche 1 bis 7, wobei die elektronische Einheit ein Mikroprozessor ist und wobei jede der Operationen einem Befehl des Mikroprozessors entspricht.

9.  Elektronische Einheit zur kryptografischen Datenverarbeitung, die Verarbeitungsmittel umfasst, die geeignet sind, ausgehend von einem ersten Punkt auf einer elliptischen Kurve, der mittels von mindestens drei ersten Elementen eines Galois-Körpers dargestellt ist, einen zweiten Punkt auf der elliptischen Kurve zu bestimmen, der mittels von mindestens drei zweiten Elementen des Galois-Körpers dargestellt ist, wobei jedes der zweiten Elemente ausgehend von den ersten Elementen mittels einer ersten Menge von Operationen erhalten wird, die Multiplikationen und Additionen umfasst,

wobei die Verarbeitungsmittel geeignet sind, eine zweite Menge von aufeinanderfolgenden Operationen durchzuführen, die jeweils einen Typ aufweisen, wobei die Folge der Typen der aufeinanderfolgenden Operationen der zweiten Menge eine regelmäßig wiederkehrende Wiederholung von mehreren Operationstypen bildet, die mindestens eine Multiplikation und eine  Addition im Galois-Körper umfassen, wobei die zweite Menge von Operationen die erste Menge von Operationen umfasst,

**dadurch gekennzeichnet, dass** die mehreren Typen von Operationen ein Quadrieren im Galois-Körper umfassen.

## Claims

1. Method for cryptographic data processing implemented in an electronic entity, wherein, from a first point on an elliptic curve, represented by means of at least three first elements of a Galois field, a second point on the elliptic curve, represented by means of at least three second elements of the Galois field, is determined, each of the second elements being obtained from the first elements by means of a first set of operations comprising multiplications and additions,

   wherein a second set of successive operations is implemented, each having a type, the sequence of the types of the successive operations of the second set forming a periodic repetition of a plurality of types of operation including at least a multiplication and an addition in the Galois field, the second set of operations comprising the first set of operations, **characterised in that** the plurality of types of operation comprises a squaring in the Galois field.

2. Method according to claim 1, wherein said three first elements are Jacobian projective coordinates of the first point.

3. Method according to either claim 1 or claim 2, wherein said three second elements are Jacobian projective coordinates of the second point.

4. Method according to any of claims 1 to 3, wherein the second point is the scalar product of the first point and an integer.

5. Method according to claim 4, wherein the scalar product is implemented by means of additions in Jacobian projective coordinates and doublings in modified Jacobian projective coordinates.

6. Method according to any of claims 1 to 3, wherein the second point is the sum of the first point and a third point of the elliptic curve.

7. Method according to any of claims 1 to 6, wherein the elliptic curve has as Weierstrass Jacobian projective equation $Y^2 = X^3 + aXZ^4 + bZ^6$, where a and b are elements of the Galois field and $4a^3 + 27b^2$ is not the zero element.

8. Method according to any of claims 1 to 7, wherein the electronic entity is a microprocessor and wherein each of said operations corresponds to an instruction from the microprocessor.

9. Electronic entity for cryptographic data processing, comprising processing means capable of determining, from a first point on an elliptic curve, represented by means of at least three first elements of a Galois field, a second point on the elliptic curve, represented by means of at least three second elements of the Galois field, each of the second elements being obtained from the first elements by means of a first set of operations comprising multiplications and additions,

   the processing means being capable of implementing a second set of successive operations, each having a type, the sequence of the types of the successive operations of the second set forming a periodic repetition of a plurality of types of operation including at least a multiplication and an addition in the Galois field, the second set of operations comprising the first set of operations,

   **characterised in that** the plurality of types of operation comprises a squaring in the Galois field.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2838210

**Littérature non-brevet citée dans la description**

*   Efficient elliptic curve exponentiation using mixed co-ordinate. **H. COHEN ; T. ONO ; A. MIYAJI.** Advances in Cryptology - ASIACRYPT '98. Springer, 1998, vol. 1514, 51-65
*   **B. CHEVALLIER-MAMES ; M. CIET ; M. JOYE.** Low-cost Solutions for Preventing Simple Side-Channel Analysis : Side-Channel Atomicity. *IEEE Transactions on Computers,* 2004, vol. 53 (6), 760-768
*   **M. CIET.** Aspects of Fast and Secure Arithmetics for Elliptic Curve Cryptography. *thèse de doctorat,* Juin 2003
*   **M. JOYE.** Fast point multiplication on elliptic curves without precomputation. *2nd International Workshop on the Arithmetic of Finite Fields,* Juillet 2008